# EUROPEAN PATENT SPECIFICATION

(11) **EP 3 578 445 B1**
(45) Date of publication and mention of the grant of the patent: **27.01.2021**
(21) Application number: 19178255.6
(22) Date of filing: 04.06.2019
(51) Int. Cl.: B62D 33/04

(54) **TRAILER WALL SEGMENT, TRAILER WALL, AND TRAILER**
ANHÄNGERWANDSEGMENT, ANHÄNGERWAND UND ANHÄNGER
SEGMENT DE PAROI DE REMORQUE, PAROI DE REMORQUE ET REMORQUE

(30) Priority: 04.06.2018 NL 2021050
(43) Date of publication of application: 11.12.2019
(73) Proprietor: Knapen Trailers BV, 5753 DL Deurne (NL)
(72) Inventor: Joosten, Petrus Johannes Maria, 5753 DL Deurne (NL)
(74) Representative: Jacobs, Bart

(56) References cited:
- EP-A1- 1 104 379
- EP-A1- 1 688 626
- DE-A1- 19 740 461
- DE-A1-102017 108 284

## Description

The present invention relates to a trailer wall segment. The present invention further relates to a trailer wall comprising a plurality of such trailer wall segments and to a trailer comprising such a trailer wall or trailer wall segment.

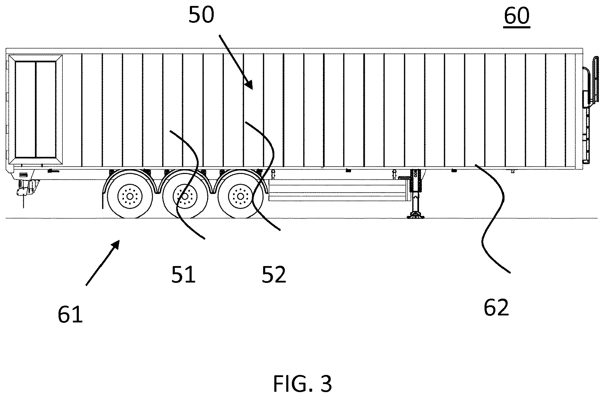

Trailers are well known vehicles in the art. An example of a trailer 60 is shown in figure 3. It comprises a trailer chassis 61 on which a trailer floor 62 is mounted. Trailer 60 further comprises a trailer wall 50 that comprises a plurality of trailer wall segments 51 that each extend upward from trailer floor 62.

Typically, trailer walls are provided with paint to improve the visual appearance and to protect the trailer walls against environmental conditions such as moisture. Prior to applying the paint, a primer is applied to improve the adhesion between the paint and trailer wall, which is typically made from aluminum panels.

To construct the trailer wall, a plurality of trailer wall segments is connected together, for example by means of welding. In most trailers, welding is only applied on the inner side of the trailer wall segments to reduce the overall costs.

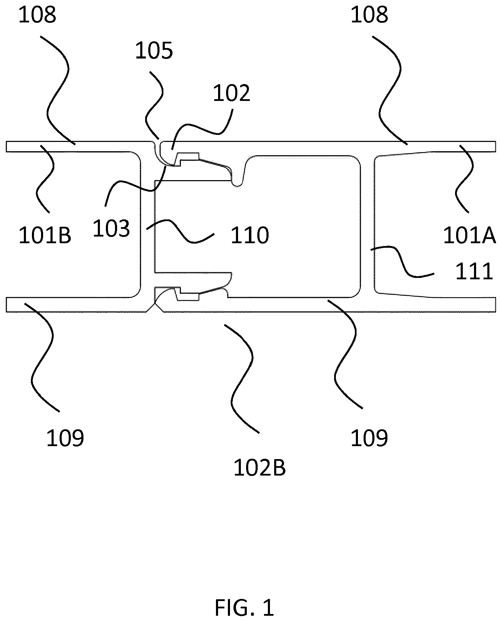

An example of a connection between trailer wall segments is shown in figure 1. Here, two trailer wall segments 101A, 101B are shown that each comprises a first plate 108 that forms an outer side of the trailer wall, and a second plate 109 that forms an inner side of the trailer wall.

Second plates 109 are fixedly connected using welding, whereas a clearance or passage 105 exists between first plates 108. To ensure proper fixation of wall segments 101A, 101B, each wall segment is provided on one edge thereof with a coupling element 102 and on an opposing edge with a receiving member 103. When a plurality of these wall segments are arranged next to each other, coupling element 102 of one trailer wall segment is received in receiving member 103 of the adjacent wall segment in a closely fitted manner. Due to the shape of receiving member 103 and coupling element 102, a second fixation is achieved in addition to the welding of second plates 109. More in particular, although coupling element 102 and receiving member 103 are not fixedly connected to each other, sufficient resistance to forces perpendicular to the trailer wall is obtained.

The advantage of having clearance 105 instead of first plates 108 abutting each other is that when paint is applied, the paint layer will, over time, display cracks less quickly. Here, it is noted that the trailer wall segments are subject to vibrations during use. These vibrations may cause the trailer wall segments to slightly move relative to each other on the outer side of the trailer wall. Such movement may introduce cracks in the paint layer, which ultimately results in corrosion of the trailer wall segments and a degraded visual appearance.

Even though the known trailer wall segment shown in figure 1 has displayed an improved life time of the applied paint layer, the Applicant has found that improvement is still required and/or desired in the field.

A trailer wall segment is known from DE19740461A1. This document discloses the following features of claim 1: A trailer wall segment, comprising: a coupling element protruding from said wall segment at a first edge of the trailer wall segment; a receiving member arranged on a second edge of the trailer wall segment opposite to the first edge; the trailer wall segment being configured such that a trailer wall can be formed by connecting a plurality of said wall segments together, wherein, in said trailer wall: a first side of a first trailer wall segment is connected to a first side of an adjacent second trailer wall segment; the coupling element of the first trailer wall segment is received in the receiving member of the second trailer wall segment, the coupling element and receiving member providing a further connection of the first trailer wall segment relative to the second trailer wall segment after the first sides of the first and second trailer wall segments are connected together; and the first and second trailer wall segments defining a passage between them on a second side of the first and second trailer wall segments opposite to said first side; wherein the trailer wall segment is configured such that, in said trailer wall, the coupling element of the first trailer wall segment and the receiving member of the second trailer wall segment at least partially define an air chamber into which said passage ends; wherein the air chamber initially widens when entering the air chamber from said passage to allow a primer and/or paint, to be sprayed onto the trailer wall built using the plurality of walls segments, to substantially fully penetrate the passage. Similar to the trailer wall segment shown in figure 1, an improvement in the life time of the applied paint layer is desired.

To address the abovementioned need, the present invention proposes a trailer wall segment as defined claim 1. This trailer wall comprises a coupling element that protrudes from the wall segment at a first edge of the trailer wall segment. It further comprises a receiving member arranged on a second edge of the trailer wall segment opposite to the first edge. Typically, the first and second edge correspond to opposing edges of the vertical seams that can be observed in the trailer wall, see for example seams 52 in figure 3.

According to the present invention, the trailer wall segment is configured such that a trailer wall can be formed by connecting a plurality of the wall segments together. In this trailer wall, a first side of a first trailer wall segment is fixedly connected by means of welding, to a first side of an adjacent second trailer wall segment, and the coupling element of the first trailer wall segment is received in the receiving member of the second trailer wall segment. Furthermore, the coupling element and receiving member provide a further fixation of the first trailer wall segment relative to the second trailer wall segment after the first sides of the first and second trailer wall segments are fixedly connected together. In addition, the first and second trailer wall segments define a passage between them on a second side of the first and second trailer wall segments opposite to the first side.

The trailer wall segment is configured such that, in the trailer wall, the coupling element of the first trailer wall segment and the receiving member of the second trailer wall segment at least partially define an air chamber into which the passage ends.

The air chamber initially widens when entering the air chamber from the passage to allow a primer and/or paint, which are to be sprayed onto the trailer wall built using the plurality of walls segments, to substantially fully penetrate the passage.

According to the invention, a maximum size of the air chamber in a direction parallel to the first plate is preferably at least two times as large as a maximum size of the passage in the same direction, and more preferably at least five times as large.

The Applicant has found that the life time of the paint layer is limited by the incomplete penetration of the paint and primer into the passage. As the paint penetrates the passage less when compared to the primer due to a larger particle size, corrosion is likely to occur in the region where the primer is located but is not covered by paint.

The paint and primer are applied using spraying techniques in which the primer and paint particles are carried in a stream of air or other gaseous medium. The Applicant has found that, when applying such stream to the known trailer wall segments, the flow dynamics of the air limits or prevents the primer and/or paint particles to reach the inside of the passage.

According to the invention, an air chamber is created that initially widens. More in particular, a maximum size of the air chamber in a direction parallel to the first plate is preferably at least two times as large as a maximum size of the passage in the same direction, and more preferably at least five times as large. This chamber changes the flow dynamics to such an extent that sufficient primer and/or paint particles can penetrate the passage. For example, the widening may result in the air chamber having a local flow resistance that is lower than that of the passage, thereby improving the penetration of the primer and/or paint particles. Therefore, compared to the prior art trailer wall segment shown in figure 1, more paint and/or primer can be applied in the passage. Consequently, the point at which the corrosion will start is located further away from the visible parts of the trailer wall, i.e. more to the inside of the trailer wall segment. As a result, the initial appearance of the paint layer can be maintained over a longer period of time compared to prior art trailer wall segments.

The penetration can be expressed in percentage of the thickness of the outer wall of the wall segments. Preferably, a penetration of the primer and/or paint layer exceeding 80% of this thickness is preferred / achieved.

As an example, the coupling element may comprise a concave surface that faces the second side and a convex surface that faces the first side.

The trailer wall segment may further comprise a first plate intended to at least partially form an outer side of the trailer wall, and a second plate intended to at least partially form an inner side of the trailer wall. The second plate is spaced parallel and apart from the first plate. The trailer wall segment may further comprise a plurality of traverse fixing members arranged in between and mutually fixating the first and second plates. In this embodiment, the first side of the trailer wall segment corresponds to a surface of the second plate that faces away from the first plate, and the second side of the trailer wall segment corresponds to a surface of the first plate that faces away from the second plate.

A first fixing member among the plurality of fixing members that is arranged closest to the first edge of the trailer wall segment can be fixedly connected to the coupling element. The coupling element may protrude from the fixing member away from the trailer wall segment. This coupling element may be integrally formed with the first fixing member. Similarly or alternatively, the receiving member can be fixedly connected to or formed, preferably integrally, with the first plate.

The receiving member may comprise a first protruding part that protrudes from the first plate towards the second plate, and a second protruding part that protrudes from the first protruding part towards the second edge. Here, the first and second protruding parts define a cavity for receiving the coupling element in a closely fitted manner.

A depth of the air chamber beyond the passage can be substantially equal to or larger than a thickness of the first plate. Here, it should be noted that within the context of the present application, the passage is defined as the opening between the first plates of adjacent wall segments that extends in a direction perpendicular to the first plate towards the second plate. The depth of the passage is typically equal to or smaller than the thickness of the first plate.

A maximum size of the air chamber in a direction parallel to the first plate is preferably at least two times as large as a maximum size of the passage in the same direction, and more preferably at least five times as large.

The trailer wall segment can be integrally formed, preferably from Aluminum.

According to a second aspect, the present invention provides a trailer wall comprising a plurality of identical wall segments as defined above, wherein the wall segments are connected in such a manner that the first side of a first wall segment is fixedly connected, for example by means of welding, to a first side of an adjacent second wall segment, and the coupling element of the first wall segment is received in the receiving member of the second wall segment. Here, the coupling element and receiving member provide a further fixation of the first wall segment relative to the second wall segment after the first sides of the first and second wall segments are fixedly connected together.

According to a third aspect, the present invention provides a trailer comprising the trailer wall as defined above and/or a trailer wall segment as described above.

Next, the present invention will be described in more detail by referring the appended drawings, wherein:
Figure 1 illustrates a combination of two known trailer wall segments;
Figure 2 illustrates a combination of two trailer wall segments in accordance with the present invention; and
Figure 3 illustrates a trailer in which the trailer wall segments of figure 1 or figure 2 can be applied.

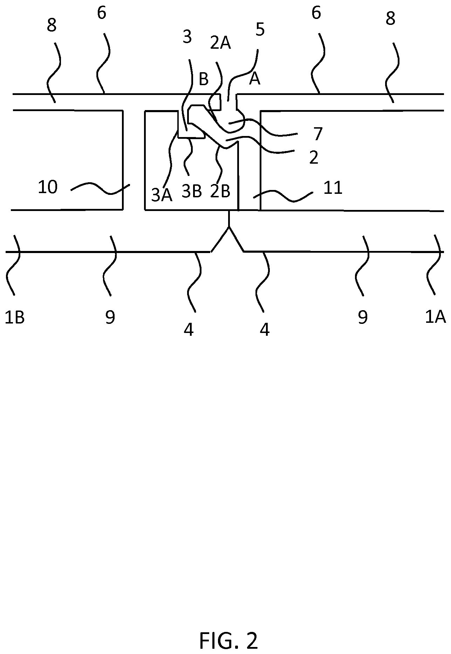

Figure 2 illustrates two trailer wall segments 1A, 1B in accordance with the present invention. Trailer wall segments 1A, 1B are identical. A first edge A of trailer wall segment 1A is arranged next to a second edge B of trailer wall segment 1B. It is noted that each trailer wall segment comprises a first edge A and a second edge B.

Each trailer wall segment 1A, 1B comprises a first side 4 and a second side 6. First side 4 corresponds to an inner side of the trailer wall, whereas second side 6 corresponds to an outer side of the trailer wall. Second sides 6 of trailer wall segments 1A, 1B are not abutting each other. Instead, a passage 5 is present between them.

Trailer wall segments 1A, 1B each comprise a first plate 8 and a second plate 9, arranged parallel and spaced apart from first plate 8. First side 4 corresponds to the bottom surface of second plate 9 in figure 2, whereas second side 6 corresponds to an upper surface of first plate 8.

Traverse fixing members 10, 11 are arranged in between first plate 8 and second plate 9. Although figure 2 only shows two of such members, more fixing members may be provided.

Figure 2 illustrates that fixing member 11 is fixedly connected, more in particular integrally, to a coupling element 2. This latter element has a concave surface 2A that faces first plate 8 and a convex surface 2B that faces second plate 9. Coupling element 2, and more in particular concave surface 2A, forms a bottom surface of air chamber 7. Although referred to as air chamber 7, the present invention is not limited to the type of gaseous medium used during spraying on the paint and/or primer.

Coupling element 2 is received in receiving member 3 that is integrally connected to first plate 8. This latter member comprises a downward protrusion part 3A and a further protrusion part 3B that protrudes towards second edge B, for example parallel to first plate 8 or second plate 9.

Coupling element 2 is not fixedly connected in receiving member 3. More in particular, when constructing a trailer wall using the trailer wall segments shown in figure 2, two trailer wall segments 1A, 1B are arranged next to each other while second sides 6 are positioned under an obtuse angle relative to each other. Next, the wall segments are rotated relative to each other such that coupling element 2 of trailer wall segment 1A fully engages receiving member 3 of trailer wall segment 1B. Once coupling element 2 is fully locked in receiving member 3, second plates 9 of trailer wall parts 1A, 1B will touch each other, allowing them to be fixedly connected by means of welding.

Coupling element 2 and receiving member 3 have complementary shapes in the sense that an end of coupling element 2 closely fits into receiving member 3. Once in place, receiving member 3 of trailer wall segment 1B prevents coupling element 2 of trailer wall segment 1A and therefore trailer wall segment 1A as a whole, to move in the direction transverse to first and second plates 8, 9. Combined with the welded connection between plates 9 of trailer wall segments 1A, 1B, sufficient fixation of these segments is obtained.

As an example, each trailer wall segment is integrally formed from Aluminum. First and second plates 8, 9 may have a thickness ranging from 1.4 to 2.2 mm and from 2.2 to 2.8 mm, respectively. Furthermore, the width and length of plates 8, 9 may range from 40 to 60 mm and from 2.2 to 3.2 m, respectively. Plates 8, 9 may be spaced apart by 20 to 30 mm. Typically, first plates 8 are separated, in a longitudinal direction of the trailer, by a passage of 1 mm. This passage extends in a height direction of the trailer along the length of plates 8.

Typically, air chamber 7 is formed as an elongated chamber that extends along seam 52 formed between the adjacent trailer wall segments. A maximum size of air chamber 7 in the longitudinal direction is approximately 5 mm. The depth of air chamber 7 typically exceeds the thickness of plates 8. Air chamber 7 initially widens relative to passage 5 and then narrows down by following surface 2A of coupling element 2.

Air chamber 7 allows sufficient paint and/or primer to penetrate passage 5. Paint and/or primer particles may be deposited using spraying techniques. The primer particles generally penetrate passage 5 more deeply than the paint particles. This is related to the fact that the particle size of the primer is smaller than the particle size of the paint. Furthermore, although the primer and paint may not fully cover the inside of air chamber 7, a significant improvement is reached over the prior art trailer wall segment shown in figure 2.

Although the present invention has been described using detailed embodiments thereof, the present invention is not limited to these embodiments and various modifications can be made without departing from the scope of the invention which is defined by the appended claims

## Claims

1. A trailer wall segment (1A; 1B), comprising:
a coupling element (2) protruding from said wall segment at a first edge (A) of the trailer wall segment;
a receiving member (3) arranged on a second edge (B) of the trailer wall segment opposite to the first edge;
the trailer wall segment being configured such that a trailer wall (50) can be formed by connecting a plurality of said wall segments together, wherein, in said trailer wall:
a first side (4) of a first trailer wall segment (1A) is fixedly connected by means of welding, to a first side (4) of an adjacent second trailer wall segment (IB);
the coupling element of the first trailer wall segment is received in the receiving member of the second trailer wall segment, the coupling element and receiving member providing a further fixation of the first trailer wall segment relative to the second trailer wall segment after the first sides of the first and second trailer wall segments are fixedly connected together; and
the first and second trailer wall segments defining a passage (5) between them on a second side (6) of the first and second trailer wall segments opposite to said first side;
wherein the trailer wall segment is configured such that, in said trailer wall, the coupling element of the first trailer wall segment and the receiving member of the second trailer wall segment at least partially define an air chamber (7) into which said passage ends;
wherein the air chamber initially widens when entering the air chamber from said passage to allow a primer and/or paint, to be sprayed onto the trailer wall built using the plurality of walls segments, to substantially fully penetrate the passage.

2. The trailer wall segment according to claim 1, wherein the coupling element comprises a concave surface (2A) facing the second side and a convex surface (2B) facing the first side, wherein the air chamber initially widens relative to passage and then preferably narrows down by following the concave surface.

3. The trailer wall segment according to any of the previous claims, further comprising:
a first plate (8) intended to at least partially form an outer side of the trailer wall;
a second plate (9) intended to at least partially form an inner side of the trailer wall, the second plate being spaced parallel and apart from the first plate;
a plurality of traverse fixing members (10, 11) arranged in between and mutually fixating the first and second plates;
wherein the first side of the trailer wall segment corresponds to a surface of the second plate that faces away from the first plate, and wherein the second side of the trailer wall segment corresponds to a surface of the first plate that faces away from the second plate.

4. The trailer wall segment according to claim 3, wherein a first fixing member (11) among the plurality of fixing members that is arranged closest to the first edge of the wall segment is fixedly connected to the coupling element, said coupling element protruding from said fixing member away from the trailer wall segment.

5. The trailer wall segment according to claim 4, wherein the coupling element is integrally formed with the first fixing member.

6. The trailer wall segment according to any of the claims 3-5, wherein the receiving member is fixedly connected to or formed, preferably integrally, with the first plate.

7. The trailer wall segment according to any of the claims 3-6, wherein a maximum size of the air chamber in a direction parallel to the first plate is at least two times as large as a maximum size of the passage in the same direction, preferably at least five times as large.

8. The trailer wall segment according to claim 6 or 7, wherein the receiving member comprises a first protruding part (3A) that protrudes from the first plate towards the second plate, and a second protruding part (3B) that protrudes from the first protruding part (3A) towards the second edge, the first and second protruding parts defining a cavity for receiving the coupling element in a closely fitting manner.

9. The trailer wall segment according to any of the claims 3-8, wherein a depth of the air chamber beyond the passage is substantially equal to or larger than a thickness of the first plate.

10. The trailer wall segment according to any of the previous claims, wherein the trailer wall segment is integrally formed, preferably from Aluminum.

11. A trailer wall (50) comprising a plurality of identical wall segments as defined in any of the previous claims, wherein the wall segments are connected in such a manner that:
the first side of a first wall segment is fixedly connected, for example by means of welding, to the first side of an adjacent second wall segment; and
the coupling element of the first wall segment is received in the receiving member of the second wall segment, the coupling element and receiving member providing a further fixation of the first wall segment relative to the second wall segment after the first sides of the first and second wall segments are fixedly connected together.

12. A trailer (51) comprising the trailer wall (50) as defined in claim 11 and/or a trailer wall segment (1A, 1B) as defined in any of the claims 1-10.

## Patentansprüche

1. Anhängerwandsegment (1A; 1B), aufweisend:
ein Kupplungselement (2), das von dem Wandsegment an einer ersten Kante (A) des Anhängerwandsegments vorsteht;
ein Aufnahmeelement (3), das an einer zweiten Kante (B) des Anhängerwandsegments der ersten Kante gegenüberliegend angeordnet ist;
wobei das Anhängerwandsegment so konfiguriert ist, dass eine Anhängerwand (50) dadurch gebildet werden kann, dass eine Mehrzahl der Wandsegmente verbunden werden, wobei in der Anhängerwand:
eine erste Seite (4) eines ersten Anhängerwandsegments (1A) durch Schweißen mit einer ersten Seite (4) eines angrenzenden zweiten Anhängerwandsegments (1B) fest verbunden ist;
das Kupplungselement des ersten Anhängerwandsegments in dem Aufnahmeelement des zweiten Anhängerwandsegments aufgenommen wird, wobei das Kupplungselement und das Aufnahmeelement eine weitere Fixierung des ersten Anhängerwandsegments relativ zu dem zweiten Anhängerwandsegment bereitstellen, nachdem die ersten Seiten der ersten und zweiten Anhängerwandsegmente fest miteinander verbunden sind; und
die ersten und zweiten Anhängerwandsegmente, einen Durchgang (5) zwischen ihnen auf einer zweiten Seite (6) der ersten und zweiten Anhängerwandsegmente gegenüber der ersten Seite definieren;
wobei das Anhängerwandsegment so konfiguriert ist, dass in der Anhängerwand das Kupplungselement des ersten Anhängerwandsegments und das Aufnahmeelement des zweiten Anhängerwandsegmentes zumindest teilweise eine Luftkammer (7) definieren, in der der Durchgang endet;
wobei sich die Luftkammer beim Eintritt in die Luftkammer von dem Durchgang aus zunächst erweitert, damit eine Grundierung und/oder Farbe, die auf die unter Verwendung der mehreren Wandsegmente gebaute Anhängerwand gesprüht wird, im Wesentlichen vollständig in den Durchgang eindringen kann.

2. Anhängerwandsegment nach Anspruch 1, wobei das Kupplungselement eine konkave Fläche (2A) umfasst, die der zweiten Seite zugewandt ist, und eine konvexe Fläche (2B), die der ersten Seite zugewandt ist, wobei sich die Luftkammer zunächst relativ zum Durchgang erweitert und sich dann vorzugsweise nach unten verengt, indem Sie der konkaven Oberfläche folgt.

3. Anhängerwandsegment nach einem der vorhergehenden Ansprüche, weiter aufweisend:
eine erste Platte (8), die dazu bestimmt ist, zumindest teilweise eine Außenseite der Anhängerwand zu bilden;
eine zweite Platte (9), die dazu bestimmt ist, zumindest teilweise eine Innenseite der Anhängerwand zu bilden, wobei die zweite Platte (9) parallel und mit Abstand zur ersten Platte angeordnet ist;
eine Mehrzahl von Querbefestigungselementen (10, 11), die dazwischen angeordnet sind und die ersten und zweiten Platten gegenseitig fixieren;
wobei die erste Seite des Anhängerwandsegments einer Oberfläche der zweiten Platte entspricht, die von der ersten Platte abgewandt ist, und wobei die zweite Seite des Anhängerwandsegments einer Oberfläche der ersten Platte entspricht, die von der zweiten Platte abgewandt ist.

4. Anhängerwandsegment nach Anspruch 3, wobei ein erstes Befestigungselement (11), das unter der Mehrzahl an Befestigungselementen am nächsten an der ersten Kante des Wandsegments angeordnet ist, fest mit dem Kupplungselement verbunden ist, wobei das Kupplungselement von dem Befestigungselement von dem Anhängerwandsegment weg vorsteht.

5. Anhängerwandsegment nach Anspruch 4, wobei das Kupplungselement mit dem ersten Befestigungselement einstückig geformt ist.

6. Anhängerwandsegment nach einem der Ansprüche 3 bis 5, wobei das Aufnahmeelement fest mit der ersten Platte verbunden oder, vorzugsweise einstückig mit ihr geformt ist.

7. Anhängerwandsegment nach einem der Ansprüche 3 bis 6, wobei eine maximale Größe der Luftkammer in einer Richtung parallel zur ersten Platte mindestens zweimal so groß ist wie eine maximale Größe des Durchgangs in derselben Richtung, vorzugsweise mindestens fünfmal so groß.

8. Anhängerwandsegment nach Anspruch 6 oder 7, wobei das Aufnahmeelement einen ersten vorstehenden Teil (3A) umfasst, der von der ersten Platte in Richtung der zweiten Platte vorsteht, und einen zweiten vorstehenden Teil (3B), der von dem ersten vorstehenden Teil (3A) in Richtung der zweiten Kante vorsteht, wobei die ersten und zweiten vorstehenden Teile einen Hohlraum zur passgenauen Aufnahme des Kupplungselements definieren.

9. Anhängerwandsegment nach einem der Ansprüche 3 bis 8, wobei eine Tiefe der Luftkammer jenseits des Durchgangs im Wesentlichen gleich oder größer ist als eine Dicke der ersten Platte.

10. Anhängerwandsegment nach einem der vorhergehenden Ansprüche, wobei das Anhängerwandsegment, vorzugsweise aus Aluminium, einteilig geformt ist.

11. Anhängerwand (50), aufweisend eine Mehrzahl identischer Wandsegmente gemäß der Definition in einem der vorhergehenden Ansprüchen, wobei die Wandsegmente so verbunden sind, dass:
die erste Seite eines ersten Wandsegments mit der ersten Seite eines angrenzenden zweiten Wandsegments fest, zum Beispiel durch Schweißen, verbunden ist; und das Kupplungselement des ersten Wandsegments in dem Aufnahmeelement des zweiten Wandsegments aufgenommen ist,
wobei das Kupplungselement und das Aufnahmeelement eine weitere Fixierung des ersten Wandsegments relativ zu dem zweiten Wandsegment bereitstellen, nachdem die ersten Seiten der ersten und zweiten Wandsegmente fest miteinander verbunden sind.

12. Anhänger (51), umfassend die Anhängerwand (50) wie in Anspruch 11 definiert und/oder ein Anhängerwandsegment (1A, 1B) wie in einem der Ansprüche 1 bis 10 definiert.

## Revendications

1. Segment de paroi de remorque (1A ; 1B), comprenant :
un élément de couplage (2) faisant saillie à partir dudit segment de paroi à un premier bord (A) du segment de paroi de remorque ;
un organe de réception (3) agencé sur un second bord (B) du segment de paroi de remorque opposé au premier bord ;
le segment de paroi de remorque étant configuré de telle sorte qu'une paroi de remorque (50) puisse être formée en raccordant une pluralité desdits segments de paroi ensemble, dans lequel, dans ladite paroi de remorque :
un premier côté (4) d'un premier segment de paroi de remorque (1A) est raccordé de façon fixe, au moyen de soudage, à un premier côté (4) d'un second segment de paroi adjacent de remorque (1B) ;
l'élément de couplage du premier segment de paroi de remorque est reçu dans l'organe de réception du second segment de paroi de remorque, l'élément de couplage et l'organe de réception fournissant une fixation supplémentaire du premier segment de paroi de remorque relativement au second segment de paroi de remorque après les premiers côtés des premier et second segments de paroi de remorque sont raccordés ensemble de façon fixe ; et
les premier et second segments de paroi de remorque définissant un passage (5) entre eux sur un second côté (6) des premier et second segments de paroi de remorque opposé audit premier côté ;
dans lequel le segment de paroi de remorque est configuré de telle sorte que, dans ladite paroi de remorque, l'élément de couplage du premier segment de paroi de remorque et l'organe de réception du second segment de paroi de remorque définissent au moins partiellement une chambre à air (7) dans laquelle ledit passage se termine ;
dans lequel la chambre à air s'élargit initialement à l'entrée dans la chambre à air depuis ledit passage pour permettre à une couche primaire et/ou de la peinture, d'être pulvérisée sur la paroi de remorque construite en utilisant la pluralité de segments de paroi, pour pénétrer sensiblement complètement dans le passage.

2. Segment de paroi de remorque selon la revendication 1, dans lequel l'élément de couplage comprend une surface concave (2A) faisant face au second côté et une surface convexe (2B) faisant face au premier côté, dans lequel la chambre à air s'élargit initialement relativement au passage et puis de préférence se rétrécit en suivant la surface concave.

3. Segment de paroi de remorque selon l'une quelconque des revendications précédentes, comprenant en outre :
une première plaque (8) prévue pour former au moins partiellement un côté extérieur de la paroi de remorque ;
une seconde plaque (9) prévue pour former au moins partiellement un côté intérieur de la paroi de remorque, la seconde plaque étant espacée, de façons parallèle et séparée, de la première plaque ;
une pluralité d'organes de fixation transversaux (10, 11) agencés entre et fixant mutuellement les première et seconde plaques ;
dans lequel le premier côté du segment de paroi de remorque correspond à une surface de la seconde plaque qui fait face à l'opposé de la première plaque, et dans lequel le second côté du segment de paroi de remorque correspond à une surface de la première plaque qui fait face à l'opposé de la seconde plaque.

4. Segment de paroi de remorque selon la revendication 3, dans lequel un premier organe de fixation (11) parmi la pluralité d'organes de fixation qui est agencé le plus près du premier bord du segment de paroi est raccordé de façon fixe à l'élément de couplage, ledit élément de couplage faisant saillie à partir dudit organe de fixation à l'opposé du segment de paroi de remorque.

5. Segment de paroi de remorque selon la revendication 4, dans lequel l'élément de couplage est formé de façon monobloc avec le premier organe de fixation.

6. Segment de paroi de remorque selon l'une quelconque des revendications 3 à 5, dans lequel l'organe de réception est raccordé de façon fixe à la première plaque, ou formé, de préférence de façon monobloc, avec cette dernière.

7. Segment de paroi de remorque selon l'une quelconque des revendications 3 à 6, dans lequel une taille maximum de la chambre à air dans une direction parallèle à la première plaque est au moins deux fois plus grande qu'une taille maximum du passage dans la même direction, de préférence au moins cinq fois plus grande.

8. Segment de paroi de remorque selon la revendication 6 ou 7, dans lequel l'organe de réception comprend une première partie saillante (3A) qui fait saillie à partir de la première plaque vers la seconde plaque, et une seconde partie saillante (3B) qui fait saillie à partir de la première partie saillante (3A) vers le second bord, les première et seconde parties saillantes définissant une cavité pour recevoir l'élément de couplage avec un ajustement serré.

9. Segment de paroi de remorque selon l'une quelconque des revendications 3 à 8, dans lequel une profondeur de la chambre à air au-delà du passage est sensiblement égale ou supérieure à une épaisseur de la première plaque.

10. Segment de paroi de remorque selon l'une quelconque des revendications précédentes, dans lequel le segment de paroi de remorque est formé de façon monobloc, de préférence d'aluminium.

11. Paroi de remorque (50), comprenant une pluralité de segments de paroi identiques tels que définis dans l'une quelconque des revendications précédentes, dans laquelle les segments de paroi sont raccordés de manière telle que :
le premier côté d'un premier segment de paroi soit raccordé de façon fixe, par exemple au moyen de soudage, au premier côté d'un second segment de paroi adjacent ; et
l'élément de couplage du premier segment de paroi soit reçu dans l'organe de réception du second segment de paroi, l'élément de couplage et l'organe de réception fournissant une fixation supplémentaire du premier segment de paroi relativement au second segment de paroi après que les premiers côtés des premier et second segments de paroi sont raccordés ensemble de façon fixe.

12. Remorque (51), comprenant la paroi de remorque (50) telle que définie dans la revendication 11 et/ou un segment de paroi de remorque (1A, 1B) tel que défini dans l'une quelconque des revendications 1 à 10.
